# DEMANDE DE BREVET EUROPEEN

(11) **EP 2 546 011 A1**
(43) Date de publication de la demande: **16.01.2013**
(21) Numéro de dépôt: 11174136.9
(22) Date de dépôt: 15.07.2011
(51) Int. Cl.: B23B 31/16, B23B 31/12

(54) **Dispositif de maintien de pièces mécaniques**

(71) Demandeur: Finter Lane SA, Panama (PA)
(72) Inventeur: Marchand, Alain, 74460 Marnaz (FR)
(74) Mandataire: Leman Consulting S.A.

(57) **Abrégé**

Dispositif de maintien de pièces mécaniques, comportant un porte-coulisseau formé d'un corps et d'une tête, ledit corps étant pourvu d'un alésage central dans lequel est placé une partie de la pièce à maintenir, et une tête de laquelle dépasse ladite pièce à maintenir, caractérisé en ce que la tête (15) comporte une zone conique (20) et au moins deux alésages latéraux (19) débouchant d'une part dans ladite zone conique (20) et d'autre part dans ledit alésage central (16), en ce qu'au moins deux desdits alésages latéraux (19) contiennent un coulisseau (12) agencé pour coulisser dans ledit alésage latéral, ledit coulisseau dépassant de la zone conique (20) de ladite tête, en ce que ledit dispositif (10) comporte en outre un élément d'actionnement (13) desdits coulisseaux agencés pour déplacer lesdits coulisseaux (12) dans les alésages latéraux (19) correspondants.

## Description

### DOMAINE TECHNIQUE

La présente invention concerne un dispositif de maintien de pièces mécaniques. Elle concerne en particulier un dispositif en mesure de maintenir des pièces ayant une forme ou une configuration particulière, en vue de leur usinage ou d'un traitement à leur faire subir. De façon plus détaillée, elle concerne un dispositif de maintien de pièces mécaniques, comportant un porte-coulisseau formé d'un corps et d'une tête, ledit corps étant pourvu d'un alésage central dans lequel est placé une partie de la pièce à maintenir, et une tête de laquelle dépasse ladite pièce à maintenir.

### TECHNIQUE ANTERIEURE

Des dispositifs de maintien de pièces mécaniques sont bien connus et largement utilisés notamment pour le décolletage, le fraisage ou plus généralement l'usinage de ces pièces. Un type de dispositif couramment utilisé est une pince de serrage élastique. Ce type de pinces comporte un corps rigide et une tête pourvue de fentes et d'un alésage central. Une bague de serrage est placée autour de la tête. La pièce à usiner est placée dans l'alésage central de telle manière que la zone à usiner de cette pièce dépasse de la tête. Lorsque la pièce est en place, la bague de serrage est disposée autour de la tête et actionnée de façon à resserrer les fentes de la tête. Ainsi, la matière de la tête serre la pièce à usiner et la maintien. Ces pinces de serrage utilisent les propriétés d'élasticité de la matière formant la tête de la pince.

Un type de dispositif de serrage similaire est connu sous l'appellation de canon de guidage. Un tel canon est généralement vissé sur le bâti ou l'arbre d'une machine. Il maintien la barre à usiner de telle façon qu'elle puisse tourner à l'intérieur du canon tandis que ce dernier peut rester immobile ou tourner, selon l'utilisation.

Ces pinces sont parfaitement fonctionnelles lorsque la partie de la pièce à usiner qui est placée dans la pince est un cylindre de diamètre constant. Pour des pièces ayant une forme particulière, ce genre de pince peut ne pas être adapté. A titre d'exemple, si la pièce à usiner comporte une zone de grand diamètre suivi d'une zone de petit diamètre et finalement de la zone à usiner, le passage de la zone de grand diamètre dans l'alésage de la tête peut poser des problèmes. En effet, il est nécessaire d'avoir une tête avec une grande élasticité pour laisser passer la zone de grand diamètre et pour serrer la tête autour de la zone de petit diamètre. L'élasticité de la tête est due à la déformation de la matière dans laquelle cette tête et réalisée. Il est clair que cette élasticité est limitée, ce qui pose des problèmes lorsque la pièce à maintenir a des zones de grandes différences de diamètre.

Pour des pièces qui ne peuvent pas être maintenues par ce type de pinces, il existe d'autres dispositifs de maintien. Un exemple connu est un mandrin avec des mors comportant une crémaillère. Ce mandrin comporte un filet agissant sur la crémaillère des mors de façon à les déplacer simultanément et à assurer le centrage de la pièce à usiner.

Ces mandrins permettant ce type de serrage sont relativement difficiles à usiner donc coûteux. De plus, la mise en place et le serrage de la pièce à usiner est relativement longue et difficile à automatiser. Un tel mandrin n'est donc pas idéal et réservé aux cas où les pinces de serrage élastique ne sont pas utilisables.

### BREF EXPOSE DE L'INVENTION

La présente invention se propose de pallier les inconvénients des dispositifs de l'art antérieur en réalisant un dispositif de maintien des pièces offrant une large gamme d'utilisations possibles. Ce dispositif de maintien est toutefois plus simple à réaliser qu'un mandrin comportant des mors.

Ce but est atteint par un dispositif de maintien de pièces mécaniques telle que défini en préambule et caractérisé en ce que la tête comporte une zone conique et au moins deux alésages latéraux débouchant d'une part dans ladite zone conique et d'autre part dans ledit alésage central, en ce qu'au moins deux desdits alésages latéraux contiennent un coulisseau agencé pour coulisser dans ledit alésage latéral, ledit coulisseau dépassant de la zone conique de ladite tête, en ce que ledit dispositif comporte en outre un élément d'actionnement desdits coulisseaux agencés pour déplacer lesdits coulisseaux dans les alésages latéraux correspondants.

Dans le dispositif de l'invention, le maintien de la pièce à usiner ou à traiter n'est pas réalisé grâce à l'élasticité de la matière formant l'outil de serrage. Ceci permet de donner aux éléments de serrage, des courses de très grande amplitude, sans risquer de déformer le dispositif. Il en résulte qu'il est possible de maintenir des pièces ayant par exemple des zones de diamètre fortement différent.

En utilisant le principe de l'invention, il est également possible de maintenir de façon très efficace, des pièces de forme non conventionnelle. A titre d'exemple, il est possible de maintenir des pièces ayant un ou plusieurs méplats, des pièces ayant des sections transversales carrées, hexagonales ou autres, des zones filetées, des pièces coniques, etc.

Ces pièces peuvent être mises en place de façon automatique et le dispositif de maintien peut être verrouillé très simplement, également de façon automatique.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue éclatée d'une partie du dispositif de l'invention selon un premier mode de réalisation de l'invention;
- la figure 2 est une vue en perspective d'une partie du dispositif de l'invention selon un deuxième mode de réalisation;
- la figure 3 est une vue en perspective d'une partie du dispositif de l'invention selon un troisième mode de réalisation;
- la figure 4 est une vue partiellement en coupe du dispositif de maintien de l'invention, dans une première position dite ouverte;
- la figure 5 est une vue similaire à la figure 4, dans une deuxième position dite fermée;
- la figure 6 est une vue schématique en coupe d'un détail du dispositif de l'invention selon un mode de réalisation particulier dans une position ouverte;
- la figure 7 est une vue similaire à la figure 6, dans une position fermée;
- la figure 8 est une vue schématique en coupe d'une variante du dispositif de maintien de l'invention;
- la figure 9 est une vue schématique du dispositif de l'invention lorsqu'il est utilisé sur une machine, dans la position illustrée par la figure 4;
- la figure 10 est une vue similaire à la figure 9, dans la position illustré par la figure 5; et
- la figure 11 est une vue schématique du mode de réalisation du dispositif de l'invention tel que représenté par la figure 8, utilisé sur une machine.

### MANIERE DE REALISER L'INVENTION

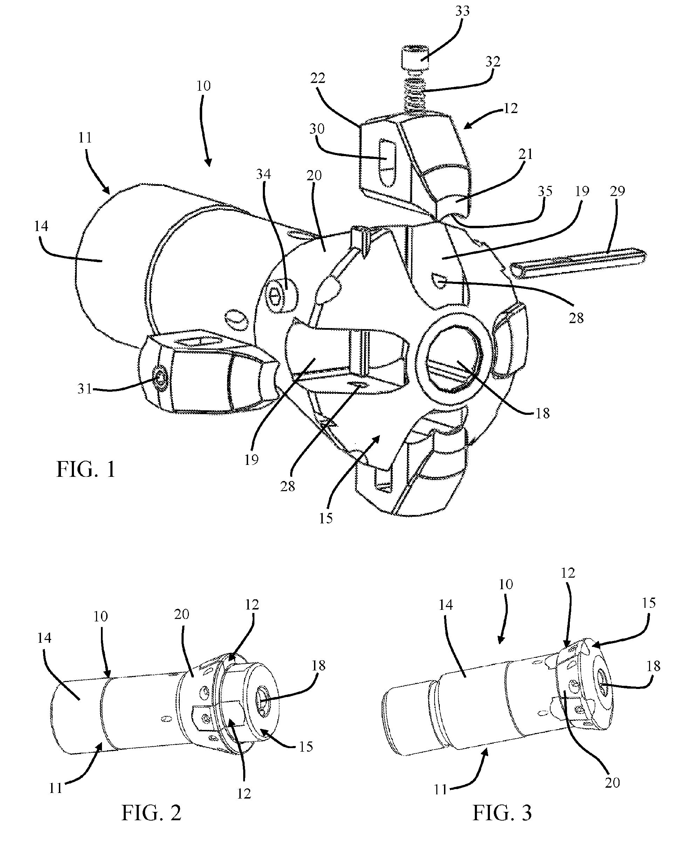

En référence aux figures, le dispositif de maintien 10 de l'invention peut prendre différentes formes, trois d'entre elles étant illustrées ici. L'une des formes, dénommée "pince grande ouverture" est illustrée par la figure 1. Une autre forme, dite "pince de serrage" est illustrée notamment par la figure 2. La troisième forme, dénommée "canon de guidage" est illustrée par la figure 3. Dans la présente invention, la notion de maintien d'une pièce englobe aussi bien la notion de serrage que celle de guidage.

Le dispositif de maintien 10 est formé essentiellement d'un porte-coulisseau 11, de coulisseaux 12 et d'un élément d'actionnement 13 des coulisseaux. Le porte-coulisseau 11 comprend un corps 14 et une tête 15. Le corps 14 est de forme générale cylindrique et comprend un alésage central 16 ayant un diamètre intérieur supérieur au diamètre des pièces mécaniques 17 à maintenir. En d'autres termes, le rapport entre la dimension de l'alésage central et celle des pièces à maintenir est tel que la pièce à maintenir peut être introduite dans l'alésage central. Selon l'utilisation du dispositif de maintien, le porte-coulisseau 11 peut être prévu pour être entraîné en rotation par une machine d'usinage par exemple. Cet entraînement en rotation est réalisé de façon conventionnelle et n'est pas décrit plus en détail ici.

Le porte-coulisseau 11 peut être également être prévu pour guider la pièce mécanique sans tourner. Dans ce cas, la pièce peut tourner dans le dispositif de maintien.

Le corps 14 du porte-coulisseau 11 est solidaire de la tête 15, ces deux éléments étant généralement usinés dans un même bloc de matière. Cette tête comporte un alésage central 18 aligné avec l'alésage central 16 du corps et, dans les exemples illustrés, quatre alésages latéraux 19. Il est également possible de prévoir moins d'alésages latéraux, par exemple 2 ou 3, ou plus d'alésages, par exemple 6 ou 8 alésages. Le nombre d'alésage peut dépendre de la taille des pièces à maintenir, de leur forme particulière, de la force de serrage souhaitée, etc.

La tête 15 du porte-coulisseau comporte une zone conique 20. Les alésages latéraux 19 débouchent d'une part dans la zone conique 20 de la tête et d'autre part, dans l'alésage central 18 de cette tête. Ces alésages latéraux sont prévus pour recevoir chacun un coulisseau 12. Les dimensions et les formes respectives des alésages latéraux et des coulisseaux sont telles que les coulisseaux 12 peuvent se déplacer longitudinalement dans les alésages latéraux 19 sans jeu ou avec un jeu faible. Ces coulisseaux sont en outre prévus pour dépasser légèrement de la zone conique 20 de la tête lorsqu'ils sont en appui contre la pièce 17 à maintenir. Il est à noter qu'en fonction de la pièce à maintenir, les coulisseaux peuvent être changés. La zone du coulisseau en appui contre la pièce à maintenir peut ainsi être adaptée à la forme particulière de cette pièce. De même, la longueur du coulisseau peut être ajustée au diamètre de la pièce. Selon une utilisation particulière, il est possible que le dispositif de maintien 10 comporte plus d'alésages latéraux 19 que de coulisseaux 12. A titre d'exemple, il est envisageable d'avoir une tête 15 comportant six alésages latéraux et de n'utiliser que trois coulisseaux. Ceci permet une grande souplesse d'utilisation.

Selon un mode de réalisation avantageux, les coulisseaux ont une face avant 21 et une face arrière 22 légèrement incurvées. Ceci permet d'assurer un déplacement et un maintien optimal des coulisseaux dans l'alésage latéral correspondant.

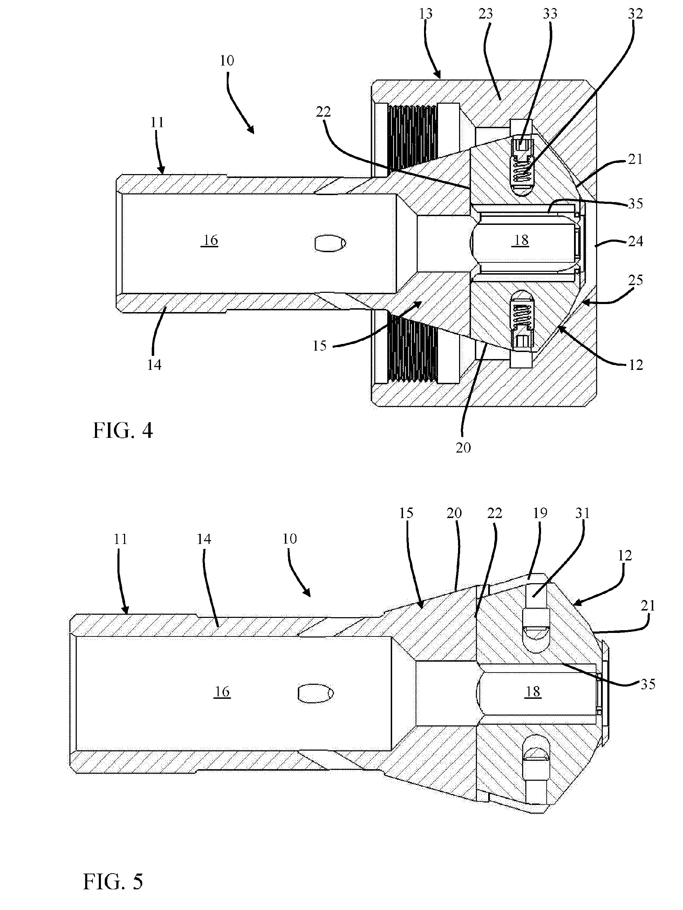

L'élément d'actionnement 13 des coulisseaux peut prendre différentes formes. Dans les modes de réalisation illustrés par les figures 1, 4-7, 9 et 10, cet élément d'actionnement est un bonnet 23.

Ce bonnet comporte un passage central 24 et une zone intérieure conique 25. Il est disposé autour de la tête 15 du dispositif de maintien de telle façon que la pièce 17 maintenue dans l'alésage central de la tête et du corps traverse également le passage central 24 du bonnet.

En position d'utilisation, la zone intérieure conique 25 du bonnet est disposée à proximité de la zone conique 20 de la tête.

Lorsque le bonnet 23 est déplacé vers l'arrière par rapport au corps, c'est-à-dire dans une direction opposée à la zone dans laquelle la pièce mécanique est usinée, la zone conique 25 du bonnet prend appui contre les zones des coulisseaux 12 qui dépassent de la zone conique de la tête. Le contact entre ces plans inclinés a pour effet de presser les coulisseaux en direction de l'alésage central de la tête. Ces coulisseaux 12 se déplacent et prennent appui contre la pièce mécanique 17 de façon à la maintenir.

Le déplacement des coulisseaux est réalisé grâce au déplacement relatif du porte-coulisseau 11 par rapport au bonnet 23. Ce déplacement relatif est en principe réalisé en déplaçant le porte-coulisseau tout en maintenant le bonnet immobile.

Selon un mode de réalisation préféré, le déplacement du porte-coulisseau 11 vers l'avant ou l'arrière est réalisé par le biais de moyens hydrauliques, électriques ou pneumatiques liés à la machine sur laquelle le dispositif de maintien 10 est installé.

Comme on peut aisément le comprendre, le rapport entre le déplacement longitudinal du porte-coulisseau 11 et le déplacement transversal des coulisseaux 12 dépend de la pente de la zone interne conique 25 du bonnet. La pente peut être définie par l'angle formé par une génératrice du cône avec l'axe longitudinal de l'alésage central. Plus cet angle est élevé, plus le déplacement transversal des coulisseaux sera élevé pour un même déplacement relatif du bonnet et du porte-coulisseau. De manière similaire, le rapport entre la force longitudinale appliquée sur le bonnet et la force de serrage de la pièce dépend également de la pente de la zone interne conique du bonnet. Plus cet angle est élevé, plus la force à appliquer sur le bonnet devra être grande pour une force de serrage constante.

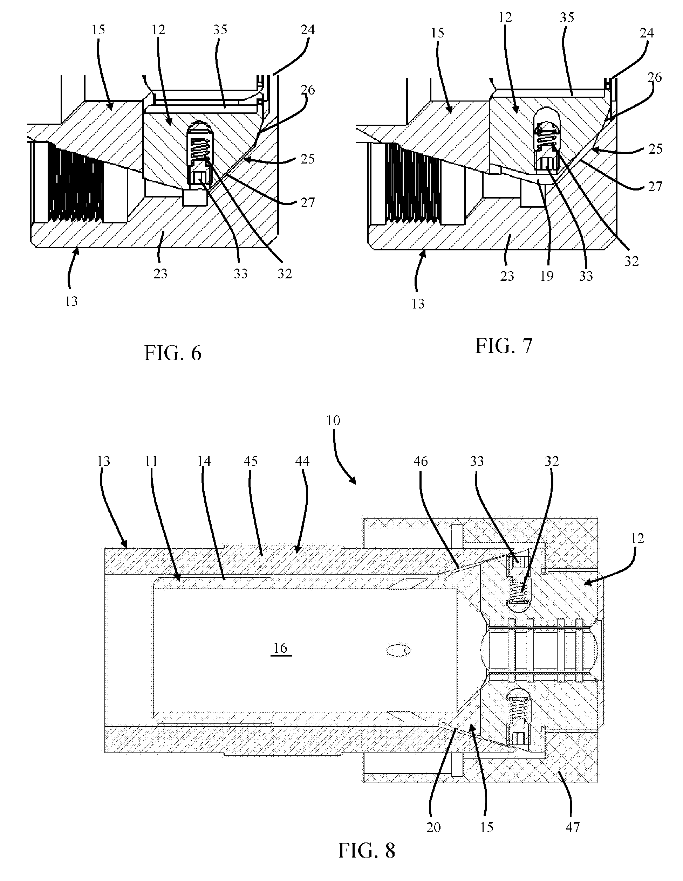

Selon une variante avantageuse illustrée par les figures 6 et 7, la zone interne conique du bonnet peut être formée de plusieurs parties coniques ayant des angles différents. A titre d'exemple, une première partie 26 peut avoir un angle élevé permettant un déplacement important des coulisseaux pour un faible déplacement du bonnet. Une deuxième partie 27 peut avoir un angle plus faible pour assurer une plus grande force de serrage.

En déterminant de façon adéquate les angles des différentes parties du bonnet, il est possible d'optimiser les déplacements des coulisseaux ainsi que les forces de serrage.

Dans le mode de réalisation illustré par la figure 1, la tête 15 comporte, pour chaque coulisseau 12, une gorge 28 agencée pour recevoir une barrette 29. Les coulisseaux 12 comportent chacun une lumière 30 transversale. Lors de la mise en place des coulisseaux, la barrette 29 est introduite dans la gorge 28 correspondante et dans la lumière 30. Les coulisseaux comportent en outre un trou 31 au moins partiellement fileté ayant un axe sensiblement perpendiculaire à un axe longitudinal de la barrette. Ce trou 31 contient d'une part un ressort de rappel 32 et d'autre part, une vis de précontrainte 33. Une des extrémités du ressort de rappel 32 prend appui sur la barrette 29 et l'autre extrémité sur la vis de précontrainte 33.

La fonction du ressort de rappel 32 coopérant avec la barrette 29 est de déplacer les coulisseaux 12 vers l'extérieur de la tête lorsque le bonnet ne les presse pas en direction de l'alésage central. Grâce à ceci, les coulisseaux laissent le passage libre pour la mise en place et le retrait de la pièce à usiner. La barrette 29 peut être maintenue dans la gorge 28 au moyen d'une vis de maintien 34.

Les coulisseaux tels qu'illustrés par la figure 1 comprennent une face inférieure 35 prenant appui contre la pièce à maintenir. Cette face peut avoir un profil incurvé destiné à s'adapter à la majorité des pièces à maintenir ou au contraire, avoir un profil spécifique à la pièce à maintenir.

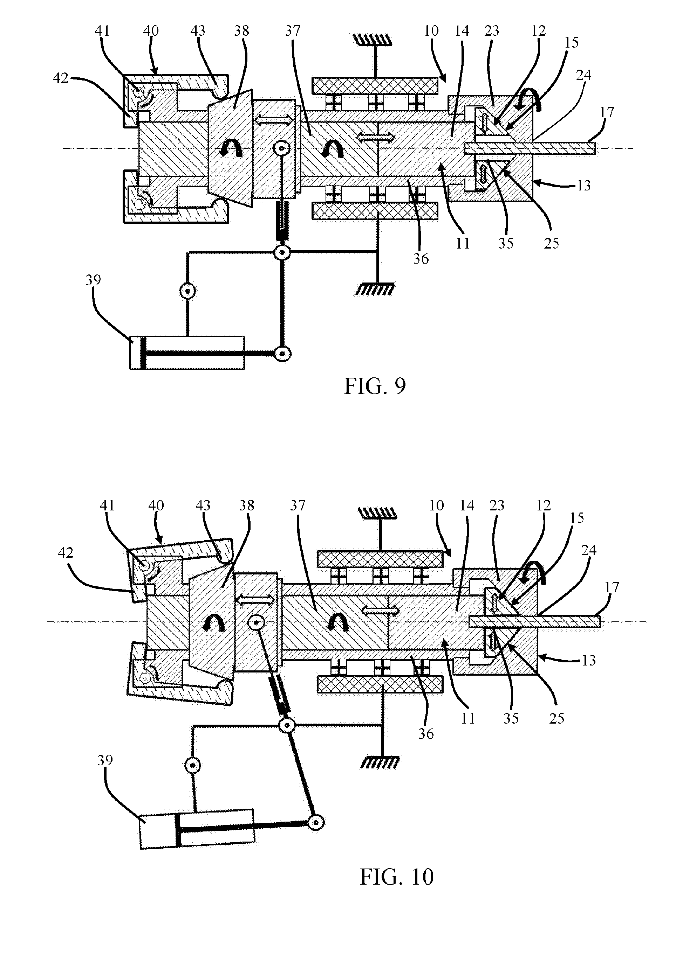

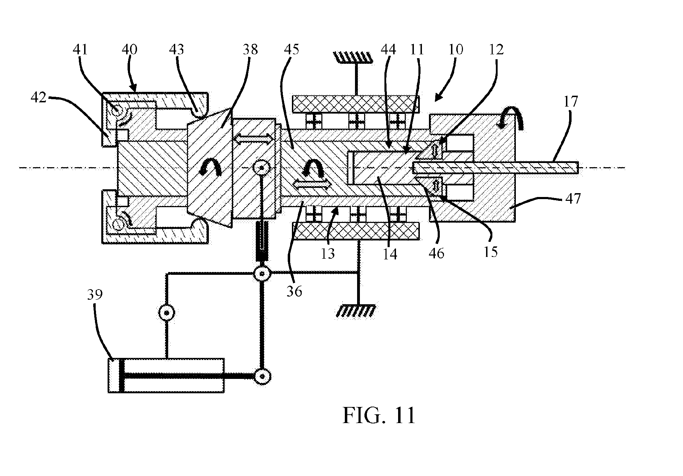

Les figures 9 à 11 illustrent le dispositif de maintien 10 de l'invention tel qu'il est utilisé sur une machine, par exemple en vue de l'usinage des pièces maintenues. Plus précisément, les figures 9 et 10 illustrent l'utilisation d'un dispositif de maintien réalisé sous la forme d'une pince "grande ouverture" telle qu'illustrée par la figure 1 notamment. La figure 11 concerne un dispositif de maintien réalisé sous la forme d'une "pince de serrage" illustrée par la figure 2. Le mode de réalisation représenté par la figure 11 utilise un dispositif de maintien représenté par les figures 2 et 8.

Dans la figure 9, le dispositif est ouvert, ce qui permet la mise en place et le retrait de la pièce. Dans la figure 10, les coulisseaux sont pressés vers le centre de l'alésage central de façon à maintenir la pièce.

Dans le mode de réalisation illustré par ces figures, le bonnet 23 est solidaire d'un arbre 36 entourant le corps 14 du dispositif de maintient. Le porte-coulisseau 11 est monté sur une douille 37 de façon à être solidaire de celle-ci. La douille reçoit un élément conique 38 pouvant coulisser le long de l'arbre. L'élément conique est solidaire d'un vérin 39 agencé pour déplacer cet élément conique vers l'avant et vers l'arrière.

L'arbre 36 comprend deux chiens 40 pouvant pivoter autour d'un axe 41 solidaire de l'arbre. Les chiens ont une patte arrière 42 agencée pour prendre appui contre la douille et une patte latérale 43 agencée pour prendre appui contre une zone inclinée de l'élément conique 38.

Lorsque le vérin 39 est activé pour faire reculer l'élément conique 38, les pattes latérales 42 des chiens en appui sur les zones inclinées s'écartent de l'alésage central. Les chiens 40 pivotent autour de l'axe 41 solidaire de l'arbre. Les extrémités des pattes arrières 43 en appui contre la douille 37 pressent cette dernière vers l'avant. Le bonnet 23 étant fixe, le déplacement vers l'avant du porte-coulisseau a pour effet de presser les coulisseaux 12 vers le centre et ainsi, de maintenir la pièce entre les coulisseaux.

Lorsque le vérin 39 est actionné pour ramener l'élément conique 38 vers l'avant, les chiens 40 pivotent dans leur position illustrée par la figure 6. Les pattes arrières 42 ne pressent plus la douille vers l'avant. Celle-ci peut reprendre sa position arrière, ce qui a pour effet de déplacer le porte-coulisseau 11 par rapport au bonnet 23. L'action conjuguée des barrettes 29 et des ressorts de rappel 32 pressent les coulisseaux 12 vers l'extérieur et libèrent ainsi la pièce mécanique 17.

Dans le mode de réalisation illustré par la figure 11, l'élément d'actionnement 13 des coulisseaux est un cylindre d'actionnement 44 disposé autour de la tête 15 et d'au moins une partie du corps 14 du porte-coulisseau 11. Ce cylindre d'actionnement 44 comporte une zone cylindrique 45 dans laquelle le corps peut se déplacer longitudinalement. Il comporte en outre une zone conique 46 disposée à proximité de la tête 15 et des coulisseaux 12 lorsque le dispositif 10 est monté.

Dans ce mode de réalisation, le porte-coulisseau 11 est associé au cylindre d'actionnement 44 non de façon rigide comme dans le mode de réalisation des figures 9 et 10. En effet, le porte-coulisseau 11 peut se déplacer longitudinalement dans ce cylindre d'actionnement 44. Le dispositif de maintien 10 peut comporter un capuchon 47 disposé autour de la tête 15 du porte-coulisseau 11 et solidaire de ce dernier.

Ce capuchon 47 peut avoir le même aspect extérieur que le bonnet 23, mais il ne joue pas le rôle d'élément d'actionnement des coulisseaux. Cet élément d'actionnement est formé par le cylindre d'actionnement.

La zone conique 46 du cylindre d'actionnement entre en contact avec les coulisseaux 12 lorsque ce cylindre d'actionnement est déplacé vers l'avant. Le porte-coulisseau 11 est généralement maintenu dans une position longitudinale fixe grâce au maintien du capuchon 47 dans une position fixe.

Ce déplacement vers l'avant du cylindre d'actionnement a pour effet de presser les coulisseaux 12 vers l'alésage central et ainsi de maintenir la pièce.

Le déplacement du cylindre d'actionnement peut être effectué de la même manière que le déplacement du porte-coulisseau tel qu'illustré par les figures 9 et 10.

Le dispositif selon l'invention peut être modifié sans pour autant que son principe de fonctionnement ne soit modifié. Les zones coniques des coulisseaux peuvent être placées en direction de l'arrière de la tête, c'est-à-dire du côté du corps, ou au contraire, en direction de l'avant. Grâce au fait que les coulisseaux sont indépendants les uns des autres, le déplacement des moyens d'actionnement a pour effet de centrer la pièce à maintenir sans utilisation d'un dispositif de centrage spécifique et complexe.

L'utilisation d'un bonnet 23 ou d'un capuchon 47 autour de la tête présente plusieurs avantages. Il est par exemple possible d'injecter de l'air sous pression ou un fluide dans le bonnet ou le capuchon. Ceci permet d'évacuer d'éventuels copeaux ou d'éviter qu'ils entrent dans la tête lors de l'usinage de pièces. Ceci permet également de refroidir le dispositif de maintien et la pièce lors de l'usinage.

## Revendications

1. Dispositif de maintien de pièces mécaniques, comportant un porte-coulisseau formé d'un corps et d'une tête, ledit corps étant pourvu d'un alésage central dans lequel est placé une partie de la pièce à maintenir, et une tête de laquelle dépasse ladite pièce à maintenir, **caractérisé en ce que** la tête (15) comporte une zone conique (20) et au moins deux alésages latéraux (19) débouchant d'une part dans ladite zone conique (20) et d'autre part dans ledit alésage central (16), **en ce qu'**au moins deux desdits alésages latéraux (19) contiennent un coulisseau (12) agencé pour coulisser dans ledit alésage latéral, ledit coulisseau dépassant de la zone conique (20) de ladite tête, **en ce que** ledit dispositif (10) comporte en outre un élément d'actionnement (13) desdits coulisseaux agencés pour déplacer lesdits coulisseaux (12) dans les alésages latéraux (19) correspondants.

2. Dispositif de maintien selon la revendication 1, **caractérisé en ce que** l'élément d'actionnement (13) est un bonnet (23) recouvrant la tête (15) du porte-coulisseau (11), ce bonnet comportant un passage central (24) disposé en regard dudit alésage central (16) et une zone intérieure conique (25) disposée à proximité de ladite zone conique (20) de la tête du porte-coulisseau.

3. Dispositif de maintien selon la revendication 2, **caractérisé en ce que** la zone intérieure conique (25) du bonnet (23) comporte au moins deux parties (26, 27) ayant des angles de conicité distincts.

4. Dispositif de maintien selon la revendication 1, **caractérisé en ce que** l'élément d'actionnement (13) est un cylindre d'actionnement (44) disposé au moins partiellement autour du porte-coulisseau (11) de façon à pouvoir se déplacer longitudinalement par rapport à ce porte-coulisseau, ce cylindre d'actionnement (44) comportant une zone conique (46) disposée à proximité des coulisseaux (12).

5. Dispositif de maintien selon la revendication 4, **caractérisé en ce que** la zone conique (46) du cylindre d'actionnement (44) comporte au moins deux parties ayant des angles de conicité distincts.

6. Dispositif de maintien selon la revendication 4, **caractérisé en ce que** la tête (15) du porte-coulisseau (11) est au moins partiellement entourée d'un capuchon (47).

7. Dispositif de maintien selon la revendication 1, **caractérisé en ce que** la tête (15) du porte-coulisseau (11) comporte au moins une gorge (28) traversant les alésages latéraux (19), **en ce que** les coulisseaux (12) comportent une lumière (30) et **en ce que** le dispositif de maintien (10) comporte une barrette (29) traversant la gorge (28) et la lumière (30) du coulisseau.

8. Dispositif de maintien selon la revendication 7, **caractérisé en ce que** le coulisseau (12) comporte un trou fileté (31) agencé pour recevoir une vis de précontrainte (33) et un ressort de rappel (32) prenant appui d'une part sur la vis de précontrainte (33) et d'autre part sur ladite barrette (29).
